# EUROPEAN PATENT APPLICATION

(11) **EP 4 692 262 A1**
(43) Date of publication of application: **11.02.2026**
(21) Application number: 24918573.7
(22) Date of filing: 26.11.2024
(51) Int. Cl.: C09D 201/00, C09D 5/06, C09D 7/40, C09D 7/61, C09D 7/65

(54) **PAINT**

(30) Priority: 18.01.2024 JP 2024006249
(71) Applicant: Kuretake Co., Ltd., Nara-shi, Nara 630-8670 (JP)
(72) Inventor: YOSHIDA, Katsuya, Nara-shi, Nara 630-8670 (JP); IWATA, Nagomi, Nara-shi, Nara 630-8670 (JP); ITO, Masaya, Nara-shi, Nara 630-8670 (JP)
(74) Representative: Isarpatent
(86) International application number: PCT/JP2024/041753
(87) International publication number: WO 2025/154398

(57) **Abstract**

Provided is a paint including: a first color material being colored resin beads having a particle size of 1.0 µm or more; a second color material being a color pigment having a particle shape with a particle size of 0.5 µm or less; and an extender pigment having a particle shape, in which the second color material shows a different hue from that of the first color material.

## Description

### CROSS-REFERENCE TO RELATED APPLICATION

This application claims priority to Japanese Patent Application No. 2024-006249, and the disclosure of Japanese Patent Application No. 2024-006249 is incorporated herein by reference in its entirety.

### FIELD

The present invention relates to a paint easy to express color separation.

### BACKGROUND

Patent Literature 1 discloses a paint composition including a color pigment and an extender pigment being particles having a uniform shape. In this paint composition, light calcium carbonate having a uniform shape is used as the extender pigment. Patent Literature 1 describes that the paint composition can make large the thickness of a coating film applied to, e.g., painting paper to thereby increase covering properties and effectively increase concealability of the color pigment, unlike the case where heavy calcium carbonate having irregular shapes is used as the extender pigment.

### CITATION LIST

### Patent Literature

Patent Literature 1: JP 2000-072988 A

### SUMMARY

### Technical Problem

In developing paints, there are some cases where two or more kinds of color materials are mixed to obtain a single sample paint for the purpose of adjusting the hue of the paint. Generally, a single paint is demanded to show a single uniform and even hue. Any paint showing a non-uniform and uneven hue is therefore judged to have defects in quality. If, contrary to this judgment criterion, a paint easy to intentionally express color separation can be developed, such a paint can serve as a new option to achieve various color expressions in, for example, paintings, which should be preferable.

It is therefore an object of the present invention to provide a paint easy to intentionally express color separation.

### Solution to Problem

In order to achieve the above object, a paint according to one embodiment includes: a first color material being colored resin beads having a particle size of 1.0 µm or more; a second color material being a color pigment having a particle shape with a particle size of 0.5 µm or less; and an extender pigment having a particle shape, in which the second color material shows a different hue from that of the first color material.

### BRIEF DESCRIPTION OF DRAWINGS

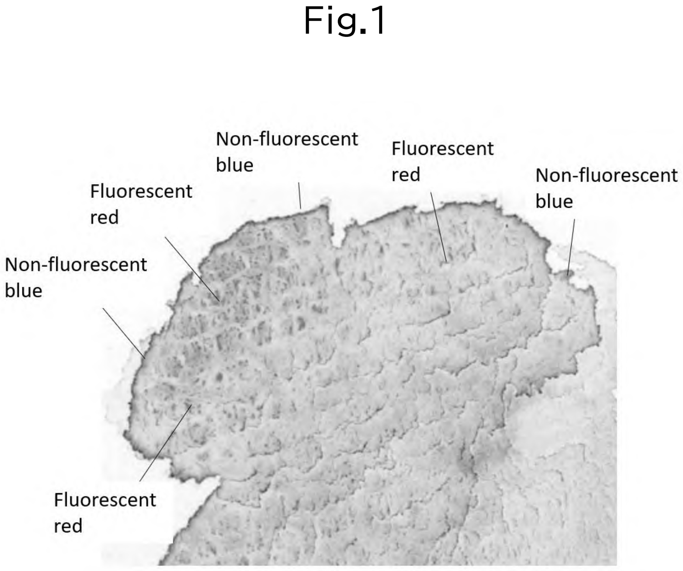

Fig. 1 is a photo showing an example state where a paint according to Example 2 applied together with water to watercolor paper develops a portion in which a first color material shows its hue (fluorescent red) and a portion in which a second color material shows its hue (non-fluorescent blue) separately on the watercolor paper.

### DESCRIPTION OF EMBODIMENTS

A paint according to one embodiment (hereinafter referred to also as "the paint") is a watercolor paint (paint composition for watercolor paintings) including a first color material, a second color material, and an extender pigment.

The watercolor paint is generally applied together with water to paper when in use. Paper is a material including a number of cellulose-based fibers (fibers mainly made of cellulose), and when in contact with water, allows the water to penetrate into gaps between the hydrophilic cellulose-based fibers or to be absorbed by the porous cellulose-based fibers through the capillary phenomenon, causing the paper to bleed with the water. At this time, the color material of the paint having particles with a smaller particle size is more likely to spread together with water over a larger area on the paper, and to spread like bleeding while the paper dries. In contrast, the color material having particles with a larger particle size is less likely to spread over a large area on the paper, remaining on a portion of the paper to which the paint has been applied.

The first color material is resin beads colored with a dye or a color pigment (hereinafter referred to also as "colored resin beads"), and can be generally used for coloring. Examples of the colored resin beads colored by a dye include a product obtained by dyeing, with a given dye, an aqueous dispersion of polymer particulates obtained by emulsion polymerization of, as a raw material, a styrene resin, an acrylic resin, an acrylonitrile resin, a copolymer resin made of these resins as main components, or the like. The dye herein can be a non-fluorescent dye or a dye including a fluorescent pigment. When a dye including a fluorescent pigment is used, the obtained colored resin beads show a fluorescent color. The dye is fixed on the colored resin beads, making it virtually insoluble in water. Alternatively, examples of the colored resin beads colored by the color pigment include a product obtained by mixing a resin such as an acrylic resin, an urethane resin, or a polyester resin with the color pigment and encapsulating the color pigment in the solidified resin beads by the resin beading method. Examples of the color pigment encapsulated in the resin beads herein include color pigments exemplified in the description of the second color material to be described later. Various colored resin beads products are commercially available. The first color material can be commercially available colored resin beads.

In terms of suppressing the colored resin beads from spreading together with water in a large area of paper, the colored resin beads in the first color material have a particle size of 1.0 µm or more. In the similar respect, the particle size of the colored resin beads in the first color material can be, for example, 2.0 µm or more or 3.0 µm or more, and is preferably 4.0 µm or more, more preferably 5.0 µm or more. The paint having particles with a larger particle size is less likely to settle on the paper to which the paint has been applied, and is more likely to fall off the paper. In terms of avoiding the falling, the particle size of the colored resin beads in the first color material can be, for example, 20 µm or less or 15 µm or less, and is preferably 10 µm or less, more preferably 8.0 µm or less. Thus, the particle size of the colored resin beads in the first color material can be, for example, 1.0 µm or more and 20 µm or less, or 2.0 µm or more and 20 µm or less, and is preferably 4.0 µm or more and 10 µm or less, more preferably 5.0 µm or more and 8.0 µm or less.

The "particle size" herein refers to a particle size (D₅₀; median diameter) when a cumulative value in the cumulative particle size distribution on a volume basis by the method according to JIS Z 8825: 2013 (Particle size analysis - Laser diffraction methods) equals 50% . The particle size can be measured with the colored resin beads or the pigment as a sample, using, for example, a laser diffraction scattering particle size distribution measuring apparatus. In order to measure the particle size of the colored resin beads of one kind or the particle size of the pigment of one kind in a composition including one or more kinds of colored resin beads and a plurality of kinds of the pigments, as in the case of the paint, a sample for the above method can be obtained by centrifuging the composition to fraction the particles of the colored resin beads or the particles of the pigments from the centrifuged composition depending on the specific gravity and collect the particles included in each obtained fraction. When an observation with the naked eye or an optical microscope finds that two or more kinds of particles are included in a given fraction obtained by the centrifugation (e.g., when red colored resin beads particles and blue color pigment particles are observed in a given fraction), the sample for the measurement can be obtained by subjecting the given fraction to further centrifugation for fractionation to further separate the two or more kinds of particles depending on the specific gravity of the materials, and collect the colored resin beads or the pigment from the fraction after the fractionation.

The specific gravity at 25 °C of the first color material, for example, can be 2.5 or less, can be 2.0 or less. The particles with a smaller specific gravity are more likely to float in a coating film obtained by applying the paint together with water to paper, taking a longer time to settle out in the coating film. Thus, the particles with a small specific gravity are thought to settle out after the particles of the extender pigment, which will be described later, settle. It is consequently thought that the particles with the small specific gravity settle out on the particles of the extender pigment that have already settled out and deposited, and are thus blocked by the particles of the extender pigment to thereby become less likely to penetrate into gaps between fibers of paper, so that the particles are suppressed from spreading over a large area of the paper. In terms of allowing the first color material to be easily fixed on the paper, therefore, the specific gravity at 25 °C of the first color material is preferably 1.5 or less, more preferably 1.3 or less. The specific gravity at 25 °C of the first color material can be, for example, more than 1.0.

The "specific gravity" herein means a measured value of the true specific gravity at 25 °C of the colored resin beads or the pigment by the method according to JIS K 0061: 2001 (Test methods for density and relative density of chemical products). The true specific gravity at 25 °C of the colored resin beads or the pigment can be measured by the specific gravity bottle method using a commercially available specific gravity bottle with a Gay-Lussac thermometer. Measuring the specific gravity of a given kind of colored resin beads or a given pigment in the composition including the colored resin beads and the plurality of kinds of pigments, as in the case of the paint, can be achieved by measuring the specific gravity of a sample for the measurement which can be obtained by fractionating the composition by centrifugation as has been described for the method for measuring the particle size and collect the colored resin beads or the pigment from the obtained fraction.

In terms of allowing color separation to clearly appear on the paper on which the paint is applied, the first color material can be colored resin beads including an inorganic fluorescent pigment. Examples of the inorganic fluorescent pigment include a metal oxide obtained by doping a rare earth element. In terms of allowing the color separation to appear more clearly, the first color material, which has a small specific gravity and can thus be easily fixed on the paper, is more preferably colored resin beads including an organic fluorescent pigment. The fluorescent pigment is mainly colored by photoluminescence, in which light is emitted when the pigment returns to a ground state after an excited state due to absorption. Examples of the organic fluorescent pigment include, but not limited to, merocyanine, perylene, acridine, luciferin, pyranine, stilbene, rhodamine, coumarin, fluorescein, and umbeliferone.

The first color material can include only a single kind of colored resin beads having a particle size of 1.0 µm or more, or can include a combination of two or more kinds of colored resin beads respectively having a particle size of 1.0 µm or more. In terms of showing the hue of the first color material to stand out on the paper, the content of the first color material in the paint can be, for example, 5 mass % or more or 10 mass % or more, and is preferably 15 mass % or more or 20 mass % or more, more preferably 25 mass % or more. In terms of preventing the hue of the first color material from standing out on the paper so significantly that the hue of the second color material does not relatively stand out, the content of the first color material in the paint can be, for example, 40 mass % or less or 35 mass % or less, and is preferably 32 mass % or less, more preferably 30 mass % or less. Hence, the content of the first color material in the paint can be, for example, 5 mass % or more and 40 mass % or less, and is preferably 15 mass % or more and 32 mass % or less, more preferably 25 mass % or more and 30 mass % or less.

The term "content" herein refers to a content converted in terms of solid content (i.e., content in dry mass without water), unless water is mentioned (e.g., Table 1 and Table 3 below). In other words, the content of each component in the paint can be a content of each component in the paint gently dried at ordinary temperature under a dry atmosphere until being entirely uniformly dried and held at a constant weight, unless otherwise stated about water. The "ordinary temperature" herein refers to a constant temperature within a range between 5 °C and 35 °C. When the paint includes two or more components of which the content is to be shown, the term "content" herein means a "total content" of the two or more components. For example, when the paint includes two or more kinds of colored resin beads corresponding to the first color material, the phrase "content of the first color material" refers to the total content of the two or more kinds of colored resin beads.

The second color material is a single kind of color pigment or a mixture of two or more kinds of color pigments insoluble in water or oil, having a particle shape, and generally used for coloring. In terms of allowing the second color material to more easily spread over a larger area of the paper than the first color material, the particle size of the second color material is 0.50 µm or less, can be, for example, 0.40 µm or less, and is preferably 0.30 µm or less, more preferably 0.25 µm or less. The particle size of the second color material can be, for example, 0.05 µm or more, and is preferably 0.10 µm or more, more preferably 0.15 µm or more. Hence, the particle size of the second color material can be, for example, 0.05 µm or more and 0.50 µm or less, or 0.05 µm or more and 0.40 µm or less, and is preferably 0.10 µm or more and 0.30 µm or less, more preferably 0.15 µm or more and 0.25 µm or less.

In terms of clearly presenting that a portion in which the first color material shows its hue thickly and a portion in which the second color material shows its hue thickly are developed separately on the paper, a ratio of the particle size of the colored resin beads in the first color material to the particle size of the color pigment in the second color material (particle size of colored resin beads in first color material (µm) / particle size of color pigment in second color material (µm)) can be, for example, 5.0 or more, and is preferably 10 or more, more preferably 20 or more, further preferably 30 or more.

The specific gravity at 25 °C of the second color material can be, for example, 2.6 or less, 2.4 or less, or 2.3 or less, can be 1.6 or more, 1.8 or more, or 2.0 or more. In terms of more easily spreading the color pigment in the second color material over a larger area of the paper, the specific gravity at 25 °C of the second color material is preferably larger than the specific gravity at 25 °C of the first color material. When the second color material has a large specific gravity, the particles of the color pigment in the second color material settle out on the paper before the particles of the colored resin beads in the first color material, and penetrate together with water into gaps between the fibers of the paper in the coated film of the paint applied to the paper. Thereby, the particles of the color pigment in the second color material are thought to more easily spread over a large area of the paper. In the similar respect, the specific gravity at 25 °C of the second color material is more preferably 1.3 times or more, further preferably 1.6 times or more, of the specific gravity at 25 °C of the first color material.

The second color material can be a non-fluorescent and colored inorganic pigment having a particle shape. The non-fluorescent and colored inorganic pigment having a particle shape is preferable in that it has a high concealability, is excellent in light and heat resistance, and has a relatively large specific gravity, as compared with a non-fluorescent and colored organic pigment having a particle shape, which will be described later. Examples of a material of a white-based inorganic pigment include titanium oxide, white lead (basic lead carbonate), zinc flower (zinc oxide), and lithophone (barium sulfate / zinc sulfide). Examples of a material of a red-based inorganic pigment include red iron oxide (iron (III) oxide), red lead (zinc oxide), vermilion (mercury sulfide), and molybdenum red. Examples of a material of a yellow-based inorganic pigment include chrome yellow (lead chromate), cadmium yellow (cadmium sulfide), zinc chromate, and litharge (lead monoxide). Examples of a material of a blue-based inorganic pigment include ultramarine, prussian blue (iron (III) ferrocyanide), and cobalt aluminate. Examples of a material of a black-based inorganic pigment include iron black (iron (II, III) oxides) and carbon black.

The second color material can be a non-fluorescent and colored organic pigment having a particle shape. The non-fluorescent and colored organic pigment having a particle shape is preferable in that it is often brighter in color than the non-fluorescent and colored inorganic pigment having a particle shape described above. Examples of a material of the colored organic pigment include a polycyclic pigment, an azo pigment, and a lake pigment. Examples of a material of a yellow-based polycyclic pigment include isoindolinone, isoindoline, azomethine, anthraquinone, anthrone, and xanthene. Examples of a material of an orange-based polycyclic pigment include diketopyrrolopyrrole, anthrone, perinone, and quinacridone. Examples of a material of a red-based polycyclic pigment include quinacridone, diketopyrrolopyrrole, anthraquinone, perinone, and indigoid. Examples of a material of a purple-based polycyclic pigment include dioxazine, quinacridone, anthrone, and xanthene. Examples of a material of a blue-based polycyclic pigment include phthalocyanine, anthraquinone, and indigoid. Examples of a material of a green-based polycyclic pigment include azomethine.

The second color material can be, for example, a single kind of color pigment selected from the non-fluorescent and colored inorganic pigment having a particle shape, the non-fluorescent and colored organic pigment having a particle shape, and the fluorescent and colored organic pigment having a particle shape, or can be a combination of two or more kinds of color pigments selected therefrom. In terms of making further visually identifiable the state that the hue of the first color material and the hue of the second color material are shown separately, it is preferable that the first color material be the colored resin beads including a fluorescent pigment and the second color material be the non-fluorescent color pigment having a particle shape. The term "non-fluorescent" herein means that no coloring is found to occur by photoluminescence, that is, the color pigment shows its hue by absorbing and reflecting light. In other words, "non-fluorescent color pigment having a particle shape" can be a color pigment having a particle shape that includes no fluorescent pigment.

In terms of making visually identifiable the state that the hue of the first color material and the hue of the second color material are shown separately on the paper to which the paint has been applied, the second color material is a color pigment that shows a different hue from that of the first color material. In designing the paint, preferably selected as the second color material can be the color pigment that shows a different hue from the hue of the first color material. The term "different hue" herein means such a degree of the hue difference that an individual with normal color vision can find between the portion in which the first color material shows its hue thickly and the portion in which the second color material shows its hue thickly.

In terms of making further visually identifiable the state that the hue of the first color material and the hue of the second color material are shown separately, the hue of the first color material and the hue of the second color material are preferably 90° or more and 270° or less, more preferably 120° or more and 240° or less, further preferably 150° or more and 210° or less, apart from each other in the Munsell hue circle. The Munsell hue circle can be any one according to JIS Z 8721-1993 (Colour specification - Specification according to their three attributes) and divided into, for example, 10 hues, 24 hues, or 100 hues.

In terms of making the color separation distinguishable through a contrasting hue combination between a warm hue and a cool hue, preferable example combinations of the hue of the first color material and the hue of the second color material include red (R) and bluish green (BG), yellowish red (YR) and blue (B), yellow (Y) and purplish blue (PB), yellowish green (GY) and purple (P), green (G) and reddish purple (RP), bluish green (BG) and red (R), blue (B) and yellowish red (YR), purplish blue (PB) and yellow (Y), purple (P) and yellowish green (GY), and reddish purple (RP) and green (G). In terms of making the color separation further distinguishable through a combination of the first color material showing a fluorescent warm hue and the second color material showing a non-fluorescent cool hue, a more preferable is a combination between the first color material being the colored resin beads including an organic fluorescent pigment selected from red (R), yellowish red (YR), and yellow (Y) and the second color material being a non-fluorescent color pigment selected from bluish green (BG), blue (B), and purplish blue (PB). The specific combinations of hues are not limited to those examples shown herein.

In terms of showing the hue of the second color material to stand out on the paper, the content of the second color material in the paint can be, for example, 1.0 mass % or more, and is preferably 2.0 mass % or more, more preferably 3.0 mass % or more. In terms of preventing the hue of the second color material from standing out so significantly that the hue of the first color material does not relatively stand out, the content of the second color material in the paint can be, for example, 30 mass % or less or 20 mass % or less, and is preferably 15 mass % or less or 10 mass % or less, more preferably 5.0 mass % or less. Hence, the content of the second color material in the paint can be, for example, 1.0 mass % or more and 30 mass % or less, and is preferably 2.0 mass % or more and 15 mass % or less, more preferably 3.0 mass % or more and 5.0 mass % or less.

In terms of showing the hue of the first color material to stand out on the paper, a content ratio of the first color material to the second color material (content of first color material / content of second color material) in the paint can be, for example, 1.0 or more, 2.0 or more, or 3.0 or more, and is preferably 4.0 or more or 5.0 or more, more preferably 6.0 or more or 7.0 or more. In terms of showing the hue of the second color material to stand out on the paper, the content ratio of the first color material to the second color material (content of first color material / content of second color material) in the paint can be, for example, 10.0 or less or 9.0 or less, and is preferably 8.0 or less. In terms of making distinguishable both the hue of the first color material and the hue of the second color material, the content ratio of the first color material to the second color material (content of first color material / content of second color material) in the paint is preferably 4.0 or more and 10.0 or less, more preferably 6.0 or more and 8.0 or less.

The extender pigment, which has high transparency and thus has a small concealability, is a pigment having such characteristics that it can be hardly used as a color pigment. In general, the extender pigment is mixed with the paint for the purpose of, for example, increasing the amount of the paint, diluting the paint, or strengthening the coating film. The colored resin beads and the color pigment described above do not correspond to the extender pigment in the paint. Examples of a material of the extender pigment include barite (barium sulfate), precipitated barium sulfate, gypsum (water-containing calcium sulfate), china clay (kaolin), silica (silicon dioxide), white carbon (precipitated silica), talc, barium carbonate, and calcium carbonate.

In terms of allowing the particles of the colored resin beads in the first color material to be easily fixed on the paper, the particle size of the extender pigment in the paint can be, for example, 3.0 µm or more, and is preferably 4.0 µm or more, more preferably 5.0 µm or more. In terms of preventing the particles from falling off the paper, the particle size of the extender pigment can be, for example, 20 µm or less or 15 µm or less, and is preferably 10 µm or less or 8.0 µm or less, more preferably 6.0 µm or less. Hence, the particle size of the extender pigment can be, for example, 3.0 µm or more and 20 µm or less, and is preferably 4.0 µm or more and 10 µm or less, more preferably 5.0 µm or more and 6.0 µm or less.

The specific gravity at 25 °C of the extender pigment in the paint is not particularly limited unless it is contrary to the object of the present invention, and can be, for example, 4.0 or less, 3.5 or less, 3.0 or less, or 2.8 or less, and 1.8 or more, 2.0 or more, 2.2 or more, or 2.4 or more. In terms of allowing the first color material to be easily fixed on the paper, the extender pigment in the paint preferably has a specific gravity at 25 °C that is greater than that of the first color material. In the similar respect, the specific gravity at 25 °C of the extender pigment is more preferably 1.5 times, further preferably 2.0 times, as great as or greater than the specific gravity at 25 °C of the first color material.

In terms of allowing the color separation to clearly appear on the paper to which the paint is applied, the extender pigment in the paint preferably includes pulverized minerals or seashells. Examples of the extender pigment including pulverized minerals include china clay (kaolin). Examples of the extender pigment including pulverized seashells include Gofun powder. The particles of such a pigment (e.g., Gofun powder) have a relatively larger particle size than that of a chemically synthesized extender pigment (e.g., light calcium carbonate), and have irregular shapes and differ in shape among different particles. The mechanism in which the color separation easily appears when the extender pigment including the particles with irregular shapes is used is unknown, but is thought to be as follows. In the coating film formed of the paint applied to the paper, the particles of the extender pigment in irregular shapes that have settled out and deposited on the paper tend to form a layer with gaps that may be too small to allow the particles of the colored resin beads in the first color material, which have a relatively large particle size, to pass through, but may be large enough to allow the particles of the color pigment in the second color material, which have a relatively small particle size, to easily pass through. It is thought from this configuration that the first color material is fixed on the paper by the layer of the extender pigment and prevented from spreading over a large area of the paper whereas the second color material passes through the gaps in the layer of the extender pigment to migrate to the gaps between fibers of the paper to thereby spread together with water over a large area of the paper so as to bleed via these gaps between the fibers.

In the similar respect, the extender pigment in the paint is more preferably Gofun powder. The particle size of the Gofun powder can be, for example, 3.0 µm or more and 20 µm or less or 4.0 µm or more and 15 µm or less, and is preferably 5.0 µm or more and 10 µm or less. In terms of allowing the color separation to easily appear, it is more preferable that the Gofun powder include the particles having scale shapes when observed with a microscope. In other words, it can be further preferable that the extender pigment in the paint include calcium carbonate particles having scale shapes. In the similar respect, in the Gofun powder, an aspect ratio of the substantially rectangular surface of each of the particles having a scale shape (long side of the surface (µm) / short side orthogonal to long side of the surface (µm)) can be, for example, more than 1.5, and is preferably 2.0 or more, more preferably 3.0 or more. It appears according to the mechanism described above that the Gofun powder including the particles having such scale shapes is suitable for fixing the particles of the colored resin beads in the first color material on the paper when formed in the Gofun powder layer, but is formed in such a shape as to allow the particles of the color pigment in the second color material to easily pass through the gaps in the Gofun powder layer so that the particles of the color pigment in the second color material easily spread together with water over a large area of the paper.

The paint can include only one kind of the extender pigment, or two or more kinds of the extender pigments. In terms of efficiently fixing the first color material on the paper to thereby make the color separation distinguishable, the content of the extender pigment in the paint can be, for example, 5.0 mass % or more, and is preferably 10 mass % or more, more preferably 15 mass % or more. In terms of preventing the extender pigment from falling off the paper, the content of the extender pigment in the paint can be, for example, 30 mass % or less, and is preferably 25 mass % or less, more preferably 20 mass % or less. Hence, the content of the extender pigment in the paint can be, for example, 5.0 mass % or more and 30 mass % or less, and is preferably 10 mass % or more and 25 mass % or less, more preferably 15 mass % or more and 20 mass % or less.

In addition to the first color material, the second color material, and the extender pigment, the paint can further include, as appropriate, one or more selected from a water-soluble polymer compound, an amphipathic polymer compound, a wetting agent, an antiseptic mildewproofing agent, a drying promoter, a surfactant, a dispersant, a defoamer, and water.

The water-soluble polymer compound and the amphipathic polymer compound are used to give the paint the pigment's dispersibility or fixability to the paper. Examples of the water-soluble polymer compound include gum arabic, dextrin, and carboxymethyl cellulose. Examples of the amphipathic polymer compound include a vinyl acetate-acrylic copolymer. These polymer compounds can be individually used, or two or more of them can be used in combination. In terms of more easily giving the pigment's dispersibility or fixability to the paper, the content of one or more polymer compounds selected from the water-soluble polymer compound and the amphipathic polymer compound in the paint can be, for example, 5 mass % or more or 10 mass % or more, and is preferably 20 mass % or more. In the case where the paint is prepared in a solid form, as will be described later, the content of the one or more polymer compounds selected from the water-soluble polymer compound and the amphipathic polymer compound is more preferably 35 mass % or more, further preferably 40 mass % or more. In terms of preventing the paint from being too viscous, the content of the one or more polymer compounds selected from the water-soluble polymer compound and the amphipathic polymer compound in the paint can be, for example, 60 mass % or less, and is preferably 55 mass % or less, more preferably 50 mass % or less. Hence, the content of the one or more polymer compounds selected from the water-soluble polymer compound and the amphipathic polymer compound in the paint can be, for example, 5 mass % or more and 60 mass % or less, and is preferably 20 mass % or more and 55 mass % or less, more preferably 35 mass % or more and 50 mass % or less, further preferably 40 mass % or more and 50 mass % or less.

The wetting agent is used to maintain an appropriate moisture content in the paint and increase the dispersibility of the paint into water when in use. Examples of the wetting agent include compounds such as glycerin, ethylene glycol, propylene glycol, and polyethylene glycol. These compounds can be used individually, or two or more of them can be used in combination. In terms of maintaining the moisture content and increase resolubility, the content of the wetting agent in the paint can be, for example, 3.0 mass % or more, and is preferably 4.0 mass % or more. In terms of preventing the paint from drying too slowly, the content of the wetting agent in the paint can be, for example, 40 mass % or less or 30 mass % or less, and is preferably 20 mass % or less, more preferably 10 mass % or less. Hence, the content of the wetting agent in the paint can be, for example, 3.0 mass % or more and 40 mass % or less, and is preferably 4.0 mass % or more and 20 mass % or less, more preferably 4.0 mass % or more and 10 mass % or less.

An antiseptic mildewproofing agent used for conventional paints can be used. Examples of the antiseptic mildewproofing agent include compounds such as phenol, xylenol, formaldehyde, potassium sorbate, sodium dehydroacetate, methyl benzoate, dithio-2,2'-bis(benzmethylamide), 2-methylisothiazoline-3-one, 2-(4-thiazolyl)benzimidazole, and 2-thiocyanomethylthiobenzothiazole. These compounds can be used individually, or two or more of them can be used in combination. The content of the antiseptic mildewproofing agent in the paint can be, for example, 0.01 mass % or more or 0.05 mass % or more, and can be, for example, 5.0 mass % or less or 1.0 mass % or less.

A drying promoter, a surfactant, a dispersant, and a defoamer, which have been conventionally used in paints, can each be included in the paint in an amount conventionally included in paints. A certain amount of water can be included in the paint produced in a tube. However, when the paint including a large amount of water and having a low viscosity is prepared in a tube, the paint sometimes has a problem that the pigments therein are already separated by settling out by specific gravity before the paint is mixed with water for use. In terms of solving this problem, the paint is preferably prepared in a form of a solid paint. The content of water in the solid paint is not particularly limited unless it is contrary to the object of the present invention, and can be, for example, 10 mass % or less, can be 5 mass % or more and 9 mass % or less. The solid paint is a watercolor paint in a solid state, and is also called solid watercolor paint or Gansai. Using the properties of the solid paint that dissolves in water, the user can express, e.g., color tones, bleeding, blurring depending on the amount of water added to the solid paint.

The paint in a form of the solid paint can be preferably produced by gently drying the liquid, highly viscous paint at ordinary temperature to remove most of the water therefrom. In terms of preventing the pigments in the liquid paint from settling out by specific gravity for separation before the liquid paint solidifies by drying at ordinary temperature, it is preferable that the paint in the form of the solid paint be produced by drying, at ordinary temperature, the liquid paint in which the content of the one or more selected from the water-soluble polymer compound and the amphipathic polymer compound described above is 35 mass % or more. In terms of preventing any unnatural recesses from occurring on a surface of the obtained paint in the form of the solid paint, it is preferable that the solid paint be produced by drying, at ordinary temperature, the liquid paint in which the content of the one or more selected from the water-soluble polymer compound and the amphipathic polymer compound described above is 40 mass % or more.

The paint can further include another color material, which is a color pigment having a particle size of more than 0.5 µm, unless it is contrary to the object of the present invention. The particle size of the other color material has an upper limit that can be the same as the upper limit of the particle size already described for the first color material. However, in terms of allowing the separation between the hue of the first color material and the hue of the second color material to easily and more clearly appear on the paper, the content of the other color material in the paint can be, for example, 10 mass % or less, 5 mass % or less, 2 mass % or less, or 1 mass % or less. In the similar respect, it is preferable that the paint be a composition including substantially no color material other than the first color material and the second color material.

An object to which the paint is applied is not particularly limited as long as a watercolor paint is applicable to its surface using a brush, but is preferably paper. Examples of the paper include painting paper, watercolor paper, Japanese paper, Kent paper, and poster paper (high-quality paper). Japanese paper is made from slurry materials mainly composed of fibers obtained by beating raw material plants such as mulberry, paperbush, gampi, hemps, coniferous trees, broad-leaved trees, and bamboos. The basis weight of the paper is not particularly limited as long as the paper is configured to allow the second color material together with water to spread so as to bleed on the paper when the paint is applied thereto, and can be, for example, 5 g/m² or more and 200 g/m² or less, can be 30 g/m² or more and 130 g/m² or less. In terms of making the color separation distinguishable, the paper is preferably not subjected to sizing (anti-bleeding process of moisture) on the surface.

The matters disclosed herein include the following:
(1) A paint including: a first color material being colored resin beads having a particle size of 1.0 µm or more; a second color material being a color pigment having a particle shape with a particle size of 0.5 µm or less; and an extender pigment having a particle shape, in which the second color material shows a different hue from that of the first color material.
(2) The paint according to (1) above, in which the extender pigment has a specific gravity at 25 °C greater than that of the first color material.
(3) The paint according to (1) or (2) above, in which the extender pigment includes Gofun powder.
(4) The paint according to any of (1) to (3) above, in which the first color material is the colored resin beads including a fluorescent pigment, and the second color material is the color pigment being non-fluorescent.
(5) The paint according to any of (1) to (4) above, in which the hue of the first color material and the hue of the second color material are 90° or more and 270° or less apart from each other in a Munsell hue circle.
(6) The paint according to any of (1) to (5) above, the paint being a solid paint.

When the paint according to (1) above with water contained therein is applied to paper, the particles of the color pigment as the second color material, which are relatively small in particle size, are likely to penetrate, together with water, into gaps between fibers of the paper for spreading. In contrast, the colored resin beads as the first color material, which are relatively large in particle size, are likely to be fixed by being interfered with by the particles of the extender pigment, and are thus unlikely to penetrate into gaps between fibers of the paper for spreading. That is, on the paper to which the paint is applied, the particles of the color pigment as the second color material are more likely to spread over a larger area of the paper than the colored resin beads as the first color material. Thus, on the paper to which the paint is applied, the portion in which the hue of the first color material is shown relatively thickly and the portion in which the hue of the second color material is shown relatively thickly are likely to be developed separately from each other. Consequently, the paint that can easily express intentional color separation can be provided.

The present invention is not limited to those embodiments described above, but various improvements, modifications, or transformations can be added to the present invention based on the knowledge of the skilled person without departing from the gist of the present invention. In the present invention, any matter can be replaced by another technology within the scope in which the same operations or effects can result.

### EXAMPLES

The present invention will be hereinafter described by way of, e.g., examples, but the present invention is not limited to these examples.

The following commercially available products were prepared as the first color materials being the colored resin beads having a particle size of 1.0 µm or more:
SX-103 (colored resin beads including a red organic fluorescent pigment, manufactured by SINLOIHI CO., LTD.)
SX-104 (colored resin beads including an orange organic fluorescent pigment, manufactured by SINLOIHI CO., LTD.)
SX-105 (colored resin beads including a yellow organic fluorescent pigment, manufactured by SINLOIHI CO., LTD.)
SX-117 (colored resin beads including a pink organic fluorescent pigment, manufactured by SINLOIHI CO., LTD.)

The series of products of these colored resin beads including the organic fluorescent pigments are described to each have an average particle size of 4 µm to 6 µm. The present inventors measured the particle size of these colored resin beads including the organic fluorescent pigments by the aforementioned method, and found that, for example, the 10% diameter D₁₀ was 3.65 µm, the median diameter D₅₀ was 6.67 µm, and the 90% diameter D₉₀ was 11.6 µm, on a volume basis. Any of SX-103, SX-104, SX-105, and SX-117 had a specific gravity at 25 °C of 1.2 measured by the aforementioned method.

The following commercially available products were prepared as the second color materials being the color pigments having a particle shape with a particle size of 0.50 µm or less:
SA Blue DY-12K (blue non-fluorescent organic pigment, manufactured by Mikuni-Color Ltd.)
SA Green DY-4K (green non-fluorescent organic pigment, manufactured by Mikuni-Color Ltd.)
High Micron Red #7356NB (red non-fluorescent organic pigment, manufactured by Mikuni-Color Ltd.)
Blue FLGB Conc (blue non-fluorescent organic pigment, manufactured by Dainichiseika Color & Chemicals Mfg. Co., Ltd.)
Green FLB Conc (green non-fluorescent organic pigment, manufactured by Dainichiseika Color & Chemicals Mfg. Co., Ltd.)
Golden yellow FL4G Conc (yellow non-fluorescent organic pigment, manufactured by Dainichiseika Color & Chemicals Mfg. Co., Ltd.)
SA Blue DY-12K had a particle size measured by the aforementioned method of 0.17 µm, and a specific gravity at 25 °C measured by the method of 1.62. SA Green DY-4K had a particle size of 0.14 µm and a specific gravity at 25 °C of 2.1 as measured in the same way as above.

The following commercially available products were prepared as other color materials. Note that "Bayferrox" is a registered trademark.
Rose #13FD: Rose colored non-fluorescent organic pigment, manufactured by NOMA CHEMICAL IND. CO., LTD)
Bayferrox 3920 (ocher non-fluorescent inorganic pigment, manufactured by LANXESS K.K.)
Bayferrox 110M (brown non-fluorescent inorganic pigment, manufactured by LANXESS K.K.)
Ultramarine Blue 82 (blue non-fluorescent inorganic pigment, manufactured by VENATOR)
Any of these other color materials prepared was not in the form of the colored resin beads, and had a particle size measured by the aforementioned method of at least more than 0.5 µm, generally 2.0 µm or more.

The following commercially available products were prepared as the extender pigments having a particle shape. Generally, the Gofun powder has a particle size of about 2 µm to 6 µm.
Tokuhanajirushi Gofun (powder obtained by pulverizing naturally produced scallop shells, manufactured by Nakagawa Gofun Seizo Kabushiki Kaisha)
Barium sulfate P-30 (barium sulfate powder, manufactured by Takehara Kagaku Kogyo Co., Ltd.)

The Tokuhanajirushi Gofun powder was observed under an optical microscope and found to include a large amount of calcium carbonate particles having a scale shape. The particle size of the Tokuhanajirushi Gofun powder was measured by the aforementioned method, and found to have a 10% diameter D₁₀ of 1.55 µm, a median diameter D₅₀ of 5.42 µm, and a 90% diameter D₉₀ of 11.2 µm. Further, the specific gravity at 25 °C of the Tokuhanajirushi Gofun powder was measured by the aforementioned method, and found to be 2.71.

The following commercially available products were prepared as the water-soluble polymer compounds. Note that "AMICOL" is a registered trademark.
SUPER SOLUBLE GUM ARABIC (gum arabic, manufactured by SANEI YAKUHIN BOEKI CO., LTD)
RED BALL DEXTRIN (dextrin, manufactured by NIPPON STARCH CHEMICAL CO., LTD.)

In addition, glycerin manufactured by Kao Corporation was prepared as the wetting agent. An antiseptic and a defoamer that are commercially available generally for being mixed with paints were prepared. Used as water was direct tap water from Nara City, Nara Prefecture.

### [Examples 1 to 8]

First, a medium composition including Gofun powder as the extender pigment was prepared at the mixing ratio shown in Table 1 below:

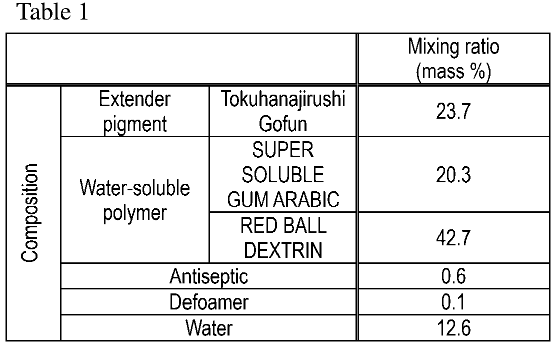

Next, the medium composition including Gofun powder (Table 1), the first color material including a fluorescent pigment, and the non-fluorescent second color material were mixed at each of the mixing ratios shown in Table 2 below. The resulting mixture was filled in a plastic container to gently dry at ordinary temperature therein to thereby obtain a sample of a solid watercolor paint (dry Gansai) according to each of Examples 1 to 8. The measured content of water in each of these solid watercolor paints was about 8 mass %.

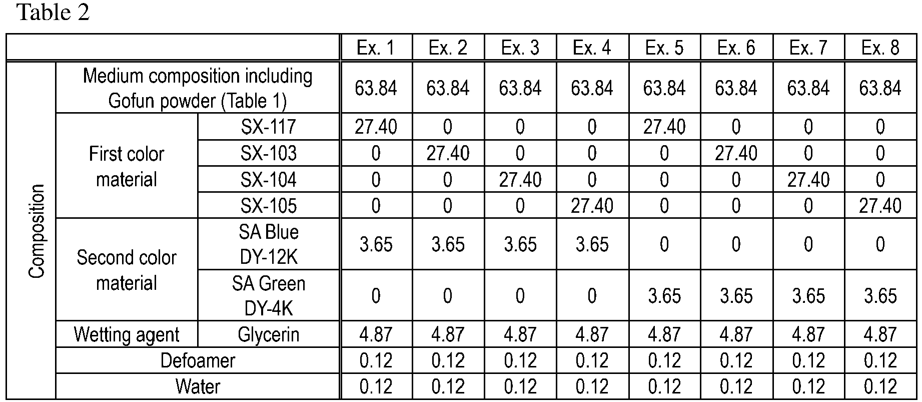

Table 2 shows mixing ratio values converted in terms of solid content (dry mass without water). The values are represented in the unit "mass %".

### [Examples 9 to 16]

First, a medium composition including barium sulfate as the extender pigment was prepared at the mixing ratio shown in Table 3 below:

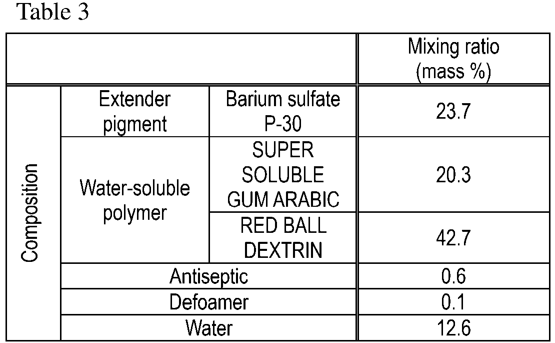

Next, the medium composition including barium sulfate (Table 3), the first color material including a fluorescent pigment, and the non-fluorescent second color material were mixed at each of the mixing ratios shown in Table 4 below. The resulting mixture was filled in a plastic container to gently dry at ordinary temperature therein to thereby obtain a sample of a solid watercolor paint (dry Gansai) according to each of Examples 9 to 16. The measured content of water in each of these solid watercolor paints was about 8 mass %.

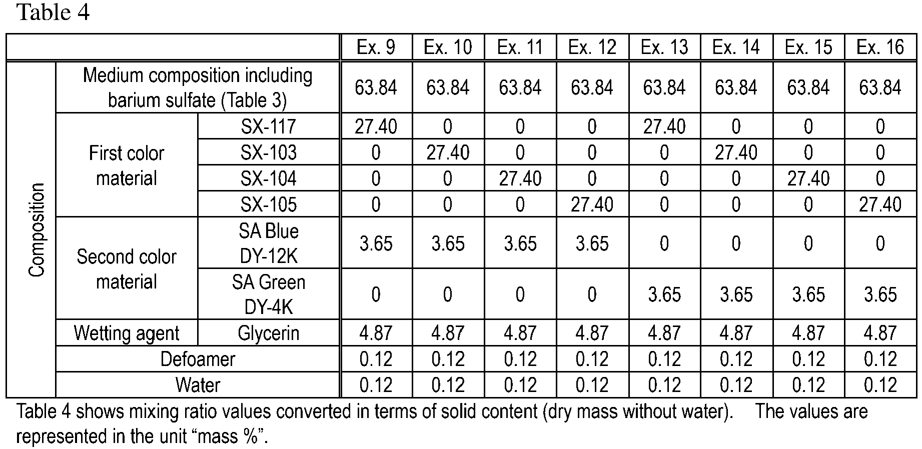

### [Comparative Examples 17 to 23]

The medium composition including barium sulfate (Table 3), the non-fluorescent other color material, and the non-fluorescent second color material were mixed at each of the mixing ratios shown in Table 5 below. The resulting mixture was filled in a plastic container to gently dry at ordinary temperature therein to thereby obtain a sample of a solid watercolor paint (dry Gansai) according to each of Comparative Examples 17 to 23. The measured content of water in each of these solid watercolor paints was about 8 mass %.

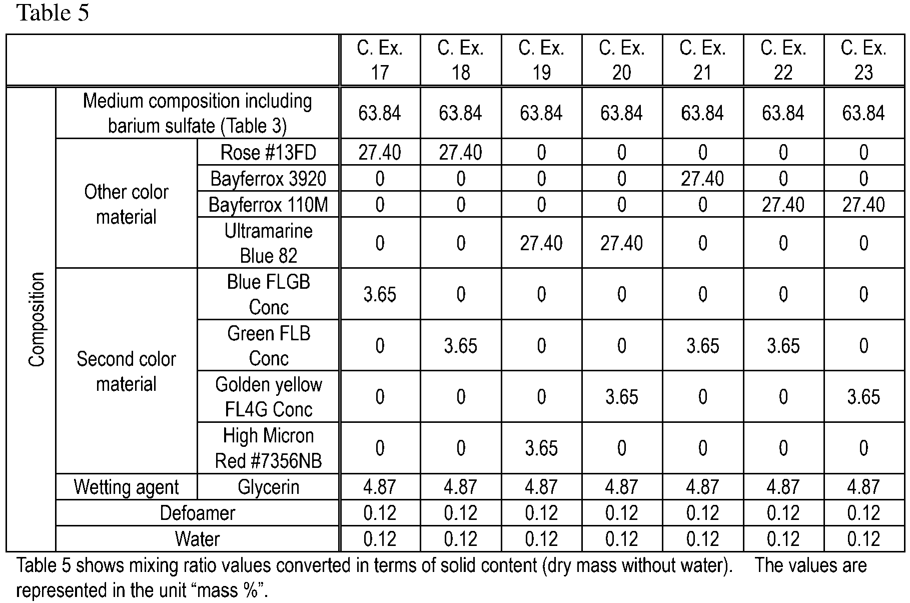

### [Evaluation test]

For each of the sample solid watercolor paints obtained as above, the surface portion of the solid watercolor paint in the container was dissolved in water little by little using a tip of a brush soaked in water to obtain a small amount of the paint, the obtained paint was mixed with a small amount of water for dilution on a plastic pallet for painting, and then a sufficient amount of the paint was applied to commercially available watercolor paper with a paintbrush tip for painting. Thereafter, a portion of the watercolor paper to which the paint was applied with the brush tip presented the hue of the first color material or the hue of the other color material. A portion of the watercolor paper a little far from the portion in which the hue above was shown presented the hue of the second color material together with water so as to bleed and spread. The watercolor paper was visually observed in a bright room to evaluate the paper for three items namely: beauty in combination of colors; visibility of color separation; and color separability, on a four-point scale based on the following criteria. The evaluation results are shown in Table 6 to Table 8 below.

Beauty in combination of colors: Evaluation criteria
AA: Difference in two colors is distinguishingly visible, achieving a particularly beautiful appearance.
A: Difference in two colors is easily visible, achieving a beautiful appearance.
B: Difference in two colors is visually noticeable at a glance although the two colors are similar to each other.
C: Two colors are so similar that difference therebetween is not recognizable unless viewed closely, resulting in an unbeautiful appearance.

Visibility of color separation: Evaluation criteria
AA: Presence of two colors coinciding with the colors of pigments mixed in the paint is strongly impressive.
A: Presence of two colors is visible at a glance.
B: Presence of two colors is visible when viewed closely.
C: Presence of two colors is not visible even when viewed closely.

Color separability: Evaluation criteria
AA: Portions on which two respective colors are developed are clearly separated from each other on watercolor paper.
A: Portions on which two respective colors are developed are adjacent to each other with a clear boundary therebetween.
B: Portions on which two respective colors are developed are adjacent to each other with an unclear boundary therebetween.
C: Two colors are developed on substantially the same portion on watercolor paper with an unobservable boundary therebetween.

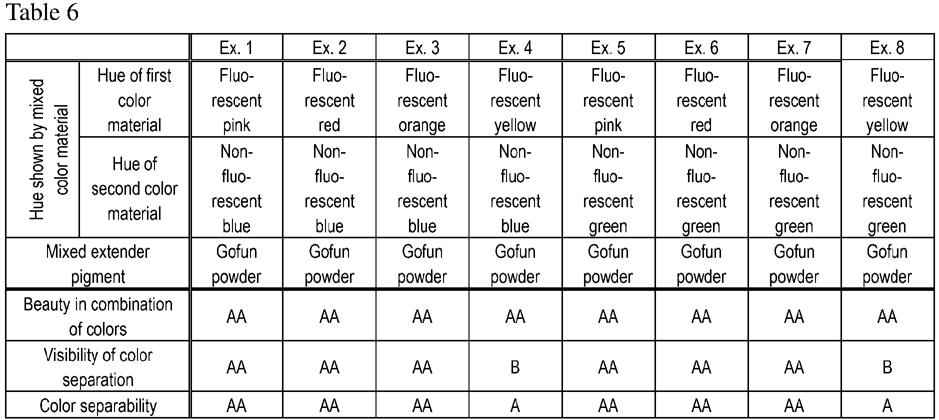

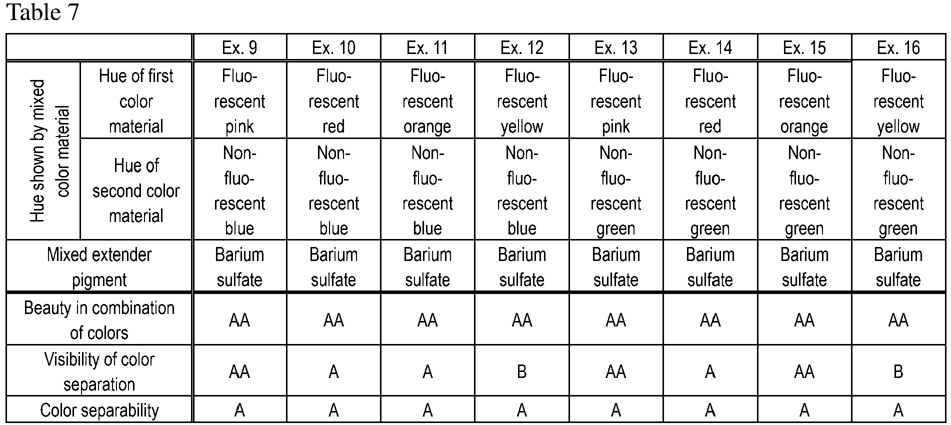

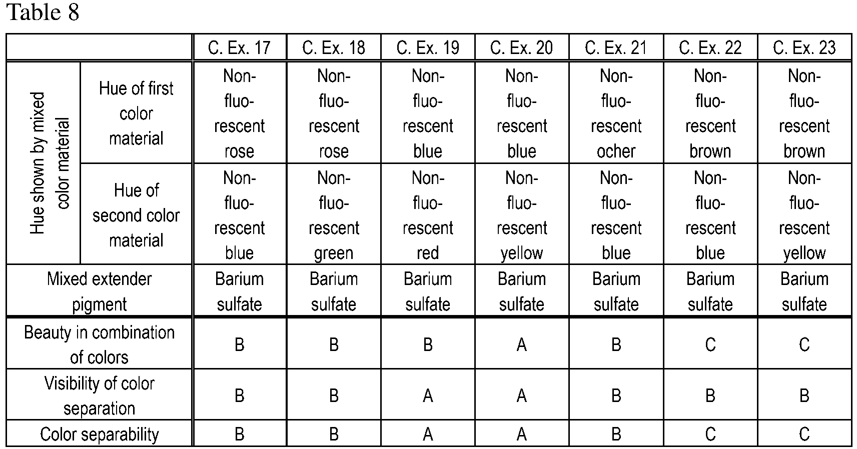

In the paint according to each of Examples 1 to 8, the fluorescent hue of the first color material and the non-fluorescent hue of the second color material were shown clearly separately from each other on the watercolor paper to obtain a contrasting painting that looked like an aurora. Fig. 1 shows the painting on the watercolor paper obtained using the paint according to Example 2. On the watercolor paper, the portion in which the hue of the second color material (non-fluorescent blue in Fig. 1) was shown was developed around the portion in which the hue of the first color material (fluorescent red in Fig. 1) was shown so as to bleed therefrom.

In each of Examples 1 to 8 in which Gofun powder was used as the extender pigment, the fluorescent hue of the first color material and the non-fluorescent hue of the second color material were clearly separated from each other in appearance, as compared with Examples 9 to 16 in which barium sulfate was used as the extender pigment. Each of Examples 1 to 16 in which the colored resin beads including the fluorescent pigment were used as the first color material showed distinguishing beauty in color combination with a particularly beautiful appearance, and was thus highly evaluated, as compared with Comparative Examples 17 to 23 in which the non-fluorescent color pigment was used as the other color material.

A solid watercolor paint (dry Gansai) according to Comparative Example 24 was also produced as a sample in the same composition and conditions as in Examples 1 to 8 described above, except that commercially available colored resin beads having a particle size of about 0.4 µm were used in substitution for the first color material used in each of Examples 1 to 8. However, no particular color separation was found on the watercolor paper surface when the paint according to Comparative Example 24 was applied together with water to the watercolor paper. This suggested that the paint in which the colored resin beads having a particle size of 0.4 µm were used in substitution for the first color material had the particle size too small to allow the colored resin beads to be easily fixed on the paper surface, and was hard to intentionally express the color separation in relation to the color pigment of the second color material.

## Claims

1. A paint comprising:
a first color material being colored resin beads having a particle size of 1.0 µm or more;
a second color material being a color pigment having a particle shape with a particle size of 0.5 µm or less; and
an extender pigment having a particle shape, wherein
the second color material shows a different hue from that of the first color material.

2. The paint according to claim 1, wherein the extender pigment has a specific gravity at 25 °C greater than that of the first color material.

3. The paint according to claim 1 or claim 2, wherein the extender pigment comprises Gofun powder.

4. The paint according to claim 1 or claim 2, wherein the first color material is the colored resin beads comprising a fluorescent pigment, and the second color material is the color pigment being non-fluorescent.

5. The paint according to claim 1 or claim 2, wherein the hue of the first color material and the hue of the second color material are 90° or more and 270° or less apart from each other in a Munsell hue circle.

6. The paint according to claim 1 or claim 2, the paint being a solid paint.
